# EUROPEAN PATENT SPECIFICATION

(11) **EP 2 509 049 B1**
(45) Date of publication and mention of the grant of the patent: **25.07.2018**
(21) Application number: 12160641.2
(22) Date of filing: 21.03.2012
(51) Int. Cl.: G07C 5/08, G01P 1/12

(54) **Vehicle with a tachograph**
Fahrzeug mit einem Fahrtenschreiber
Véhicule équipé d'un tachygraphe

(30) Priority: 06.04.2011 SE 1150301
(43) Date of publication of application: 10.10.2012
(73) Proprietor: Scania CV AB, 151 87 Södertälje (SE)
(72) Inventor: Claezon, Fredrich, SE-139 53 Värmdö (SE); Kollegger, Peter, SE-416 73 Göteborg (SE); Ullberg, Carl Fredrik, SE-182 46 Enebyberg (SE); Lindberg, Mikael, SE-171 42 Solna (SE); Söderlind, Linus, SE-126 51 Hägersten (SE)
(74) Representative: Scania CV AB

(56) References cited:
- EP-A1- 2 393 295
- WO-A2-2008/025763
- GB-A- 2 451 485

## Description

### Field of the invention

The present invention relates to a vehicle with a tachograph and a method in connection with a tachograph, according to the preambles of the independent claims.

### Background to the invention

A tachograph is a device which continuously records vehicle speed and driving and rest times and which must by law be installed in heavy trucks and buses involved in commercial traffic (there are exceptions). There are two methods of recording the information; the older method uses a paper chart (analogue tachograph) whilst, from 2005, a computer memory in the tachograph, together with a driver's card in the form of a smart card, has been used to store the information (digital tachograph).

The purpose behind the requirement to install a tachograph is to monitor driving and rest times. It also makes it possible to monitor vehicle speed. In Sweden, the maximum speed for trucks is 80 km/h (90 km/h on expressways and motorways) and for buses 90 km/h. The maximum speed for trucks with trailers is only 80 km/h, a speed which also applies on expressways and motorways.

Regulation (EEC) No 3821/85 of 20 December 1985 made the use of tachographs a legal requirement in the EEC from 29 September 1986. A "European Agreement concerning the Work of Crews of Vehicles Engaged in International Road Transport" (AETR) came into force on 31 July 1985. Regulation 561/2006/EC from the European Union, adopted on 11 April 2007, regulates driving and rest times applicable to commercial drivers. These times can be checked by employers, police and other official agencies by means of the tachograph.

In other words, in virtually all European countries, tachographs must by law be installed in vehicles which are subject to the EU's driving and rest time regulations. This applies to most vehicle combinations with a total weight of over 3.5 tonnes.

A driver is allowed to drive a maximum of 4 hours and 30 minutes without a break. After this time a break of at least 45 minutes must be taken. The maximum driving time is 9 hours or a maximum of 10 hours per day twice a week. These regulations have been introduced for safety reasons to ensure that drivers do not become too tired and that competition does not lead to unacceptable working conditions. In addition, regulations have also been put in place governing weekly rest periods, shortening of daily or weekly rest periods, cases where two persons are in the vehicle at the same time, where the vehicle is on a ferry, where the driver helps load/unload, etc.

There have been problems with tachograph tampering, e.g. interfering with the chart or installing devices which cause the tachograph to register that the truck is stationary when it is being driven. This has lead to the introduction of digital tachographs with personal driver's cards. This type of tachograph reads the vehicle's speed via an encrypted electrical interface and also stores this information in encrypted form. Drivers are only allowed to own one driver's card each and must insert it into the tachograph so that all activities can be recorded. This does not mean, however, that the new digital tachographs are tamperproof, as cheating has been discovered even with digital tachographs.

The latest generation of digital tachographs also has the option of automatically and wirelessly transferring data, both from the tachograph's internal memory and from the memory in the driver's card, to a server where data can be stored and analysed as required. This wireless transfer is often performed using a telematics unit which is located in the vehicle and which has an integrated GSM/GPRS modem. The tachograph is usually linked to the telematics unit via an electrical interface, for example a CAN databus.

An example of a digital tachograph is referred to in EP 2259231 A1.

To make it more difficult to tamper with driving and rest times, further legal requirements will be introduced whereby digital tachographs have to register a second speed signal. This means that the vehicle must be equipped with extra sensors to monitor whether it is in motion or not.

At present, the tachograph receives an input signal from a sensor preferably situated close to the vehicle's gearbox, often close to the output shaft. The input signal comprises *inter alia* a speed signal. The type of sensor used is often a magnetic sensor, e.g. a so-called Hall sensor, which detects the shaft's movements. The published patent application EP 2172783 A1 cites an example of a Hall sensor used to generate an input signal to a tachograph.

It is possible to influence (tamper with) these magnetic sensors, for example by positioning a permanent magnet in the vicinity of the sensor, which is thus neutralised with the result that the output signal from the sensor indicates that the vehicle's speed is zero whilst its actual speed is higher. This means that the tachograph registers an incorrect value indicating that the vehicle is stationary when it is actually in motion. Tampering of this kind can constitute a traffic hazard in enabling the vehicle's driver to drive the vehicle for significantly longer periods than are appropriate from a traffic safety standpoint.

Another consequence of tampering with the sensor signal is the risk that the vehicle's own systems, e.g. Lane Departure Warning (LDW) system and Automatic Emergency Brake System (AEBS), may receive incorrect input signals, which can have serious consequences.

A tachograph system known from US 20100191413 A1 aims to reduce the risk of tachograph tampering. It comprises a calculating unit used to determine vehicle speed by detecting signals from at least two independent sensors and comparing these speed signals against one another. If the speeds differ significantly, an error signal is generated.
Preferably, one of the sensors is positioned close to the gearbox, i.e. like a sensor of the type commonly used to deliver a speed signal to a tachograph.
The second signal may for example be generated by a GPS receiver which can calculate the vehicle's speed based on the vehicle's location. A further example is to use the vehicle's ABS system to generate a speed signal. A specific advantage of using a GPS receiver or the vehicle's ABS system is that most vehicles are already equipped with these systems, which means that installation is relatively inexpensive as no extra sensors need be installed.
The published patent application US 20030088348 A1 also relates to a system for reducing the risk of tachograph tampering which uses a GPS signal to determine the vehicle's speed and compare it with the speed measured by sensors on the vehicle, e.g. sensors positioned close to the gearbox or close to the vehicle's wheels. Speed differences are permitted within specified tolerance levels at which the measurement will be considered acceptable.

GB 2 451 485 discloses a method and device for identifying driving situations used for monitoring whether traffic regulations such as e.g. speed limits are observed by drivers and to enable the reconstruction of a driving situation in case of an accident. The device comprise an image acquisition unit including a 3D camera, and a telemetry unit comprising data received from different sensors on the vehicle.

The object of the present invention is to propose an improved system to protect against tachograph tampering in vehicles which is easy to install and therefore cheaper than existing systems.

### Summary of the invention

The aforesaid object is achieved with the invention defined by the independent claim.

Preferred embodiments are defined by the dependent claims.

An independent sensor signal, for example a speed sensor signal, from a second independent sensor, a camera in a vehicle safety system, for example a Lane Departure Warning (LDW) system or an Advanced Emergency Braking System (AEBS), is used as a second input signal to the tachograph.

The second sensor is independent of the speed sensor which at present delivers an input signal to the tachograph.

The independent sensor signal can also be used to verify the speed signal used by the vehicle's systems, e.g. LDW, AEBS, etc. In certain situations it can also replace the speed signal, for example if the speed signal conveys incorrect values. Both signals can be used by different systems at the same time.

A camera placed in the front window of a heavy vehicle films the surroundings in front of the vehicle and can thereby determine whether the vehicle is in motion or not.
From 2013, it will be a legal requirement in Europe for new vehicle types to be fitted with Lane Departure Warning systems and Automatic Emergency Brake Systems. A very large percentage of vehicles which have to have a digital tachograph must also be fitted with LDW/AEBS and will therefore be equipped with a forward-facing camera. This enables costs to be reduced as the camera can also report whether the vehicle is in motion or not, obviating the need to provide extra sensors on the vehicle.
The camera can also be used to estimate the vehicle's speed and thereby check whether the speed signal from the tachograph is plausible or whether tampering has occurred.
A Lane Departure Warning system is a system which enables the driver to keep the vehicle in the correct position in its traffic lane and generates a warning if the vehicle is about to veer from the lane.
An Automatic Emergency Brake System is a system which can automatically detect a potential collision or an emergency situation and can activate the vehicle's brake system to slow the vehicle and thereby avoid, or at least reduce the effects of, the collision.
The present invention is applicable to both digital and analogue tachographs.

### Brief description of the drawings

Figure 1 is a schematic block diagram which illustrates a first embodiment of the present invention.
Figure 2 is a schematic block diagram which illustrates a second embodiment of the present invention.
Figure 3 is a flow diagram illustrating the method according to the present invention.

### Detailed description of preferred embodiments of the invention

The invention will now be described in detail with reference to the attached drawings.

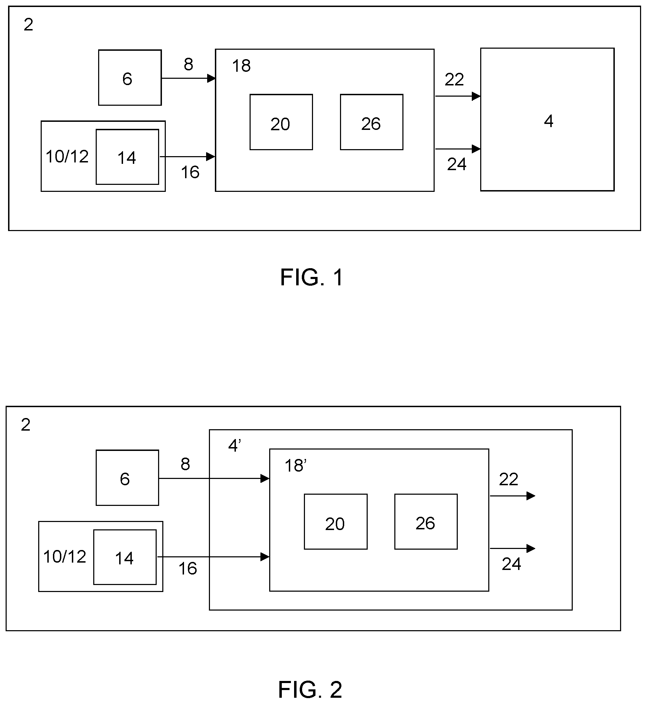

Figure 1 depicts a block diagram which illustrates a first embodiment of the present invention.
The invention relates to a vehicle 2 provided with a tachograph 4 (digital or analogue) adapted to store information which represents the vehicle's movement. The vehicle can be a truck, bus, car or any other vehicle equipped with a tachograph.

The vehicle also comprises a first motion sensor 6 adapted to deliver a first motion signal 8 which represents the vehicle's movement. This first motion sensor is, for example, a magnetic sensor, e.g. a so-called Hall sensor, to detect movements of an output shaft from the gearbox.

The vehicle also has a vehicle safety system, which may be a Lane Departure Warning (LDW) system 10 or an Automatic Emergency Brake System (AEBS) 12 and which comprises a second motion sensor 14 adapted to detect the vehicle's movement and to deliver a second motion signal 16 which represents the movement.

According to the invention, said second motion sensor is a camera fitted in such a way as to detect the vehicle's movement in relation to the surroundings. The camera is, for example, situated in the forward section of the vehicle to detect the surroundings in front of the vehicle. The vehicle safety system may comprise only one camera which is intended to detect the vehicle's movement in the surroundings and therefore need not to be integrated into a Lane Departure Warning system or an Automatic Emergency Brake System.

The first and second motion signals preferably contain *inter alia* time information concerning the time when the vehicle's movement is detected.

A verification circuit 18 adapted to receive said first and second motion signals is also provided. The verification circuit comprises a comparison circuit 20 adapted to compare the motion signals against one another and generate a verified motion signal 22 on the basis of this comparison. The verification circuit also preferably comprises a memory 26 for storing said first and second motion signals.
The verified motion signal is conveyed to and stored in the tachograph as a verified representation of the vehicle's movement.

The comparison between the signals can, for example, be performed by establishing the difference between their respective values at the same point in time. If the difference does not exceed a preset threshold value, for example 10% of the value of the first motion signal, the first motion signal is considered verified. However, if the difference does exceed the threshold value, this may indicate that one or both of the motion signals is/are inaccurate.

If this is the case, it is still possible to choose to save the first motion signal in the tachograph and at the same time impart to the tachograph a verification signal 24 which is generated by the verification circuit and which indicates the result of the comparison between the motion signals. In this way, it is possible to subsequently investigate the reasons why one or both of the signals was/were inaccurate.

According to a second embodiment of the invention, illustrated in Figure 2, the verification circuit 18' is positioned in the tachograph 4'. Otherwise, the second embodiment conforms to the first as described above and reference is made here to the description thereof.

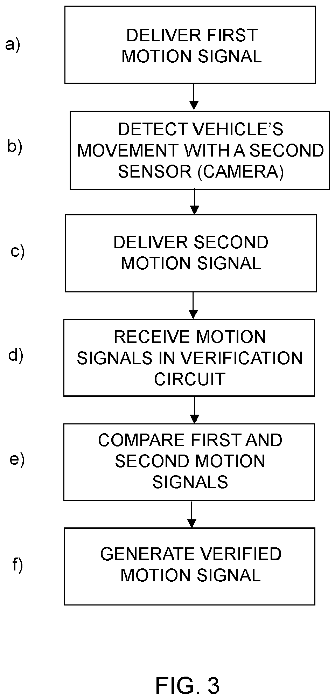

The invention also comprises a method in connection with a digital tachograph for a vehicle. The method is illustrated schematically in Figure 3.
The method involves:
a) delivering a first motion signal which represents the vehicle's movement,
b) detecting the vehicle's movement with a second motion sensor which is a camera fitted in such a way as to detect the movement in relation to the surroundings and which is positioned in a vehicle safety system, for example, in a Lane Departure Warning (LDW) system or an Automatic Emergency Brake System (AEBS),
c) delivering a second motion signal based on the output signal from the second motion sensor and which represents the vehicle's movement,
d) receiving said first and second motion signals in a verification circuit,
e) comparing said first and second motion signals, and
f) generating on the basis of the comparison a verified motion signal which is adapted to be stored in said tachograph as a verified representation of the vehicle's movement.
Preferably, the method also involves generating a verification signal which indicates the result of the comparison between the motion signals.
According to a first embodiment, the verification circuit used to implement the method is installed as a separate unit in relation to the tachograph, as shown in Figure 1. According to a second embodiment, the verification circuit is installed in, and constitutes an integrated component of, said tachograph. The second embodiment is shown in Figure 2.

## Claims

1. A vehicle (2) comprising a tachograph (4) for registration of a driver's driving and rest times adapted to store information representing the vehicle's movement, which vehicle further comprises
a first motion sensor (6) adapted to deliver a first motion signal (8), which represents the vehicle's movement,
a vehicle safety system, preferably a Lane Departure Warning (LDW) system (10) or an Automatic Emergency Brake System (AEBS) (12), which comprises a second motion sensor (14) adapted to detect the vehicle's movement and to deliver a second motion signal (16) which represents the vehicle's movement, and a verification circuit (18) positioned in the tachograph and adapted to receive the first and second motion signals containing time information concerning the time when the vehicle's movement is detected,
wherein the first motion sensor (6) is a speed sensor which is adapted to deliver the first motion signal (8) to the tachograph (4) and the first motion sensor (6) is positioned close to the vehicle's gearbox, and wherein the second motion sensor (14) is a camera fitted in such a way as to detect the vehicle's movement in relation to the surroundings, **characterised in that**
the camera is arranged to estimate the vehicle's speed, that the verification circuit (18) comprises a comparison circuit (20) adapted to compare the first and second motion signals by establishing a difference between the first and second motion signals' respective values at the same point in time and generate a verified motion signal (22) based on the comparison, that the verification circuit is adapted to generate a verification signal (24) which indicates the result of the comparison between the motion signals, and that the verified motion signal is adapted to be stored in the tachograph as a verified representation of the vehicle's movement.

2. A vehicle according to claim 1, in which the verification circuit comprises a memory (26) for storing the first and second motion signals.

3. A method in connection with a tachograph (4) for registration of a driver's driving and rest times for a vehicle (2), wherein the method is used to verify the vehicle's movement in order to protect against tachograph tampering in vehicles, the method comprising the steps of:
a) delivering a first motion signal (8) which represents the vehicle's movement detected by a first motion sensor (6) positioned close to the vehicle's gearbox wherein the first motion sensor (6) is a speed sensor adapted to deliver the first motion signal (8) to the tachograph (4),
b) detecting the vehicle's movement with a second motion sensor (14) which is a camera arranged to estimate the vehicle's speed and fitted in such a way as to detect the vehicle's movement in relation to the surroundings and which is positioned in a vehicle safety system, preferably in a Lane Departure Warning (LDW) system or an Automatic Emergency Brake System (AEBS),
c) delivering a second motion signal (16) based on the output signal from the second motion sensor which represents the vehicle's movement,
d) receiving the first and second motion signals in a verification circuit (18) positioned in the tachograph, which first and second motion signals contain time information concerning the time when the vehicle's movement is detected,
e) comparing the first and second motion signals by establishing the difference between the first and second motion signals' respective values at the same point in time, and generating a verification signal (24) which indicates the result of the comparison between the motion signals; and
f) generating on the basis of the comparison a verified motion signal (22) which is adapted to be stored in the tachograph as a verified representation of the vehicle's movement.

4. A method according to claim 3, in which the verification circuit comprises a memory for storing the first and second motion signals.

## Patentansprüche

1. Fahrzeug (2) umfassend einen Fahrtenschreiber (4) zur Aufzeichnung von Fahrten und Ruhezeiten eines Fahrers, wobei dieser dazu eingerichtet ist, Information zu speichern, die die Bewegung des Fahrzeugs repräsentiert, wobei das Fahrzeug ferner umfasst
einen ersten Bewegungssensor (6), der dazu eingerichtet ist, ein erstes Bewegungssignal (8) zu liefern, welches die Bewegung des Fahrzeugs repräsentiert,
ein Fahrzeugsicherheitssystem, vorzugsweise ein System zur Warnung vor einem Verlassen einer Spur (LDW) (10) oder ein automatisches Notfallbremssystem (AEBS) (12), das einen zweiten Bewegungssensor (14) umfasst, der dazu eingerichtet ist, die Bewegung des Fahrzeugs aufzuzeichnen und ein zweites Bewegungssignal (16) zu liefern, das die Bewegung des Fahrzeugs repräsentiert, und
einen Verifikationskreis (18), der im Fahrtenschreiber angeordnet ist und dazu eingerichtet ist, die ersten und zweiten Bewegungssignale zu empfangen, die eine zeitliche Information bezüglich der Zeit beinhalten, in der die Bewegung des Fahrzeugs ermittelt wird,
wobei der erste Bewegungssensor (6) ein Geschwindigkeitssensor ist, der dazu eingerichtet ist, das erste Bewegungssignal (8) zu dem Fahrtenschreiber (4) zu liefern, und wobei der erste Bewegungssensor (6) nah an dem Getriebe des Fahrzeugs angeordnet ist, und
wobei der zweite Bewegungssensor (14) derart auf einer Kamera basiert, dass die Bewegung des Fahrzeugs in Bezug zur Umgebung wahrgenommen wird, **dadurch gekennzeichnet, dass**
die Kamera dazu eingerichtet ist, die Geschwindigkeit des Fahrzeugs zu schätzen,
der Verifikationskreis (18) einen Vergleichskreis (20) umfasst, der dazu eingerichtet ist, die ersten und zweiten Bewegungssignale zu vergleichen, indem eine Differenz aus den entsprechend zugehörigen Werten der ersten und zweiten Bewegungssignale des gleichen Zeitpunkts bestimmt wird, und ein verifiziertes Bewegungssignal (22) zu erzeugen, das auf dem Vergleich basiert,
der Prüferkreis dazu eingerichtet ist, ein Verifizierungssignal (24) zu erzeugen, das das Ergebnis des Vergleichs zwischen den Bewegungssignalen anzeigt, und das verifizierte Bewegungssignal dazu eingerichtet ist, auf dem Fahrtenschreiber als ein verifiziertes Abbild der Bewegung des Fahrzeugs gespeichert zu werden.

2. Fahrzeug nach Anspruch 1, wobei der Verifikationskreis einen Speicher (26) zur Speicherung der ersten und zweiten Bewegungssignale umfasst.

3. Verfahren in Verbindung mit einem Fahrtenschreiber (4) zur Aufzeichnung von Fahrten und Ruhezeiten eines Fahrers für ein Fahrzeug (2), wobei das Verfahren dazu genutzt wird, die Bewegung des Fahrzeugs zu belegen, um vor Manipulation von Fahrtenschreibern in Fahrzeugen zu schützen, wobei das Verfahren die Schritte umfasst:
a) Liefern eines ersten Bewegungssignals (8), welches die Bewegung des Fahrzeugs repräsentiert, die durch einen ersten Bewegungssensor (6) aufgezeichnet wird und der nah an dem Getriebe des Fahrzeugs angeordnet ist, wobei der erste Bewegungssensor (6) ein Geschwindigkeitssensor ist, der dazu eingerichtet ist, das erste Bewegungssignal (8) zum Fahrtenschreiber (4) zu liefern,
b) Ermitteln der Bewegung des Fahrzeugs mit einem zweiten Bewegungssensor (14), der eine Kamera ist, die dazu eingerichtet ist, die Geschwindigkeit des Fahrzeugs zu schätzen, und die derart angepasst ist, dass die Bewegung des Fahrzeugs in Bezug zur Umgebung ermittelt wird und der in einem Fahrzeugsicherheitssystem angeordnet ist, vorzugsweise in einem System zur Warnung vor einem Verlassen einer Spur (LDW) oder einem automatischen Notfallbremssystem (AEBS),
c) Liefern eines zweiten Bewegungssignals (16), das auf dem Ausgangssignal des zweiten Bewegungssensors basiert, das die Bewegung des Fahrzeugs repräsentiert,
d) Empfangen der ersten und zweiten Bewegungssignale in einem Verifikationskreis (18), der in dem Fahrtenschreiber angeordnet ist, wobei die ersten und zweiten Bewegungssignale eine zeitliche Information bezüglich der Zeit umfassen, in der die Bewegung des Fahrzeugs ermittelt wird,
e) Vergleichen der ersten und zweiten Bewegungssignale, indem eine Differenz aus den entsprechend zugehörigen Werten der ersten und zweiten Bewegungssignale des gleichen Zeitpunkts bestimmt wird, und Erzeugen eines Verifizierungssignals (24), das das Ergebnis des Vergleichs zwischen den Bewegungssignalen anzeigt; und
f) Erzeugen eines verifizierten Bewegungssignals (22) auf Basis des Vergleichs, dass dazu eingerichtet ist auf dem Fahrtenschreiber als ein verifiziertes Abbild der Bewegung des Fahrzeugs gespeichert zu werden.

4. Verfahren nach Anspruch 3, wobei der Verifikationskreis einen Speicher zur Speicherung der ersten und zweiten Bewegungssignale umfasst.

## Revendications

1. Véhicule (2) comprenant un tachygraphe (4) pour l'enregistrement des temps de conduite et de repos d'un conducteur, adapté pour stocker des informations représentant le déplacement du véhicule, lequel véhicule comprend en outre
un premier capteur de mouvement (6) adapté pour délivrer un premier signal de mouvement (8), qui représente le déplacement du véhicule,
un système de sécurité de véhicule, de préférence un système (10) d'Avertissement de Sortie de Voie (LDW) ou un Système (12) de Freinage d'Urgence Automatique (AEBS), comprenant un second capteur de mouvement (14) adapté pour détecter le déplacement du véhicule et délivrer en sortie un second signal de mouvement (16) qui représente le déplacement du véhicule,
et un circuit de vérification (18) positionné dans le tachygraphe et adapté pour recevoir les premier et second signaux de mouvement contenant des informations temporelles concernant la période de temps au cours de laquelle le déplacement du véhicule est détecté,
dans lequel le premier capteur de mouvement (6) est un capteur de vitesse qui est adapté en sortie le premier signal de mouvement (8) au tachygraphe (4) et le premier capteur de mouvement (6) est positionné à proximité de la boîte de vitesses du véhicule, et dans lequel le second capteur de mouvement (14) est une caméra montée de manière à détecter le déplacement du véhicule par rapport à l'environnement, **caractérisé en ce que** la caméra est conçue pour estimer la vitesse du véhicule,
**en ce que**
le circuit de vérification (18) comprend un circuit de comparaison (20) adapté pour comparer les premier et second signaux de mouvement en établissant une différence entre les valeurs respectives des premier et second signaux de mouvement au même instant et générer un signal de mouvement vérifié (22) sur la base de la comparaison, **en ce que** le circuit de vérification est adapté pour générer un signal de vérification (24) qui indique le résultat de la comparaison entre les signaux de mouvement, et **en ce que** le signal de mouvement vérifié est adapté pour être stocké dans le tachygraphe en tant que représentation vérifiée du déplacement du véhicule.

2. Véhicule selon la revendication 1, dans lequel le circuit de vérification comprend une mémoire (26) pour stocker les premier et second signaux de mouvement.

3. Procédé associé à un tachygraphe (4) pour l'enregistrement des temps de conduite et de repos d'un conducteur pour un véhicule (2), dans lequel le procédé est utilisé pour vérifier le déplacement du véhicule afin de se protéger contre un sabotage du tachygraphe dans des véhicules, le procédé comprenant les étapes consistant à :
a) délivrer un premier signal de mouvement (8) qui représente le déplacement du véhicule détecté par un premier capteur de mouvement (6) positionné à proximité de la boîte de vitesses du véhicule, le premier capteur de mouvement (6) étant un capteur de vitesse adapté pour délivrer en sortie le premier signal de mouvement (8) au tachygraphe (4),
b) détecter le déplacement du véhicule à l'aide d'un second capteur de mouvement (14) qui est une caméra conçue pour estimer la vitesse du véhicule et monté de manière à détecter le déplacement du véhicule par rapport à l'environnement et qui est positionné dans un système de sécurité de véhicule, de préférence dans un système d'Avertissement de Sortie de Voie (LDW) ou un Système de Freinage d'Urgence Automatique (AEBS),
c) délivrer un second signal de mouvement (16) sur la base du signal de sortie du second capteur de mouvement qui représente le déplacement du véhicule,
d) recevoir les premier et second signaux de mouvement dans un circuit de vérification (18) positionné dans le tachygraphe, lesquels premier et second signaux de mouvement contiennent des informations temporelles concernant la période de temps au cours de laquelle le déplacement du véhicule est détecté,
e) comparer les premier et second signaux de mouvement en établissant la différence entre des valeurs respectives des premier et second signaux de mouvement au même instant, et générer un signal de vérification (24) qui indique le résultat de la comparaison entre les signaux de mouvement ; et
f) générer sur la base de la comparaison un signal de mouvement vérifié (22) qui est adapté pour être stocké dans le tachygraphe en tant que représentation vérifiée du déplacement du véhicule.

4. Procédé selon la revendication 3, dans lequel le circuit de vérification comprend une mémoire pour stocker les premier et second signaux de mouvement.
